(19) Europäisches Patentamt
European Patent Office
Office européen des brevets

(11) Publication number: **0 425 022 A1**

## (12) EUROPEAN PATENT APPLICATION

(21) Application number: 90202770.5

(22) Date of filing: 16.10.90

(51) Int. Cl.5: **F16L 33/22**

(30) Priority: 27.10.89 IT 2201689 U

(43) Date of publication of application:
02.05.91 Bulletin 91/18

(84) Designated Contracting States:
AT BE CH DE DK ES FR GB GR IT LI LU NL SE

(71) Applicant: METAL WORK S.p.A.
Via Segni, 7
I-25062 Concesio (Brescia)(IT)

(72) Inventor: Zani, Angelo
Via Don Minzoni, Trav.I No. 6
I-25065 Lumezzane (Brescia)(IT)

(74) Representative: Faraggiana, Vittorio, Dr. Ing.
Ingg. Guzzi e Ravizza S.r.l. Via Boccaccio, 24
I-20123 Milano(IT)

(54) Improved pipe fitting.

(57) A pipe fitting (10) of the type suitable for receiving the end of a pipe (17) and for connecting it tightly to a duct (13) inside it, comprising a main body (11) receiving within a truncated cone-shaped housing (14) an insert (18) ending in a hollow shank (20) onto which the pipe (17) is fitted. A collar (16) is screwed onto the main body (11) to radially compress the pipe (17), the collar (16) being provided with an edge (24) to grip and hold the pipe (17) passing through it.

The truncated cone-shaped housing (14) is alternatively suitable for receiving and radially gripping a bushing (25) fitted onto a rigid pipe (17´), by means of a collar screwed onto the main body.

Fig. 1

## IMPROVED PIPE FITTING

This invention refers to a pipe fitting suitable for receiving pipes made either of pliable or rigid material. There are known pipe fittings of the type having at one end the pipe firmly gripped by means of a compression screw collar and with the other end, for example, threaded in order to screw the fitting in place in an appropriate threaded hole.

Pipe fittings of this kind are basically made in two different models each having different pipe gripping features so as to be suitable for pipes of different pliability. The first type having a shank onto which can be fitted the end of a pipe made of relatively highly pliable material, such as rubber, for example. The end of the pipe is firmly gripped between the shank and a corresponding surface inside the screw collar, once the latter is tightened.

The second type, on the contrary, comprises a space inside the body of the pipe fitting, close to the end onto which the collar is screwed, which is shaped to receive one end of a pipe made of rigid material, such as for example copper or hard plastic, fitted with a choke ring which, when the collar is tightened, deforms to grip the pipe so as to firmly secure it to the pipe fitting.

The need to have two types of pipe fittings depending upon the pliancy of the pipes to be connected, on the one hand, obliges the manufacturers to have two production lines, with obvious costs, and on the other, obliges the suppliers and the users to keep a stock of both types. Moreover, whenever it is desired to change the type of connection on an already installed system, for example in order to replace the pipes with other pipes of different pliancy, it is practically obligatory to completely dismantle and replace the pipe fittings, resulting in a waste of time and money.

The general scope of this invention is to obviate the aforementioned problems by providing a pipe fitting whose body can be used for both rigid and flexible pipes by simply replacing an insert.

This scope is achieved according to the invention by providing a pipe fitting of the type suitable for receiving the end of a pipe and of tightly connecting it to a duct inside it, comprising a main body ending in an axially hollow shank onto whith the pipe is fitted and a collar which is screwed onto the main body coaxial to the shank so as to be penetrated by the pipe in correspondence with a through hole in the latter and compress it radially onto the shank, characterized by the fact that the shank has a widened base portion and protrudes from one end of an insert which is coupled, at the opposite end, to the main body by resting on the internal wall of a truncated cone-shaped housing aligned with the shank and extending into the duct inside the pipe fitting, an internal surface of the collar resting on a flange on the insert to compress it into said housing, the annular cross-section portion surrounding the hole in the collar through which the pipe passes which faces towards the main body is substantially conical so as to define an edge with an acute angled section for gripping and holding the portion of the pipe which is radially expanded by said widened base portion of the shank when the collar is screwed onto the main body.

The innovatory principles of this invention and its advantages with respect to the known technique will be more clearly evident from the following description of a possible exemplificative and non-restrictive embodiment applying such principles, with reference to the accompanying drawings, in which:

- figure 1 shows a partial cutaway front view of a pipe fitting made according to this invention in a first screwing condition;
- figure 2 shows a partial cutaway front view similar to figure 1 but with the pipe fitting in a second screwing condition;
- figure 3 shows an enlarged cutaway view of a detail of the pipe fitting shown in figures 1 and 2;
- figure 4 shows a partial cutaway front view of the pipe fitting shown in the previous figures, used for connecting a rigid pipe.

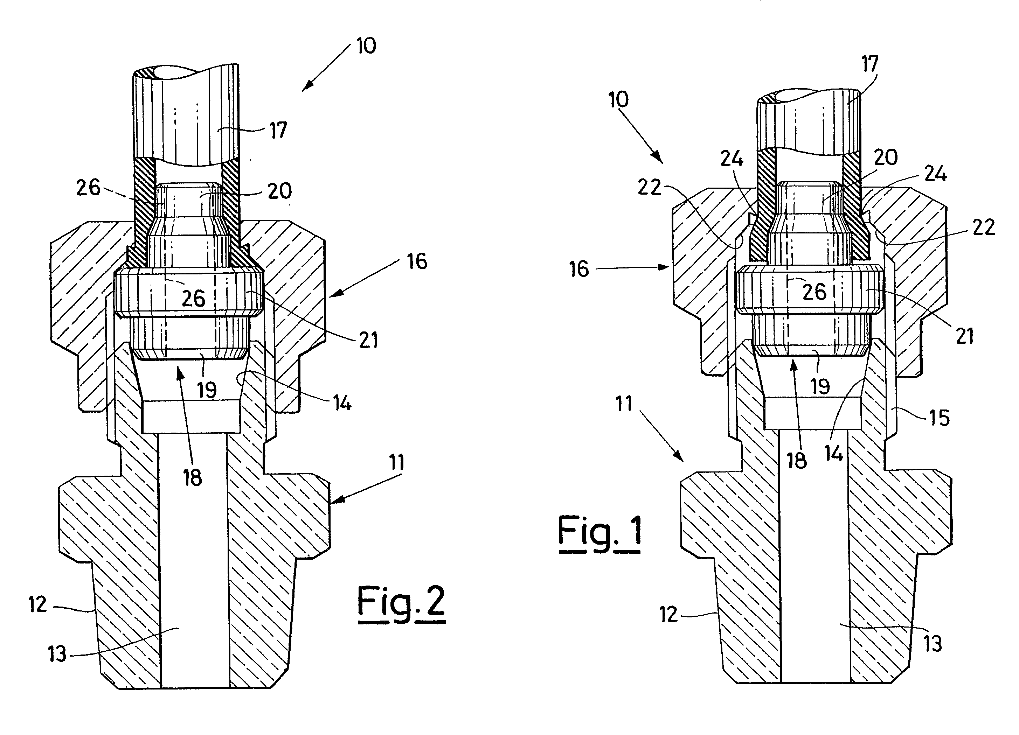

With reference to the figures, as can be seen in figures 1 and 2, a pipe fitting made according to the invention and generically indicated by reference 10, comprises a main body 11, with a coaxial duct 13 ending in a truncated co ne-shaped flare 14 in correspondence with a threaded end 15 of a stop collar 16 for tightly gripping one end of a pipe 17.

The pipe fitting, which up to here is similar to those existing in the known technique for clamping rigid pipes with a compression ring, can have the opposite end 12 of the main body predisposed, for example, threaded, to enable the pipe fitting to be screwed into place in a system.

According to this invention, the pipe fitting comprises an insert 18 axially traversed by a duct 26, with one end 19 which couples with the truncated cone-shaped surface 14 and the opposite end ending in a shank 20, which is widened at the base, which fits onto the pipe 17 made of relatively highly pliable material, for example rubber. The shank is provided, in an intermediate position, with an annular flange 21 which interferes, as will be explained further on, with a conical surface 22 inside the collar 16.

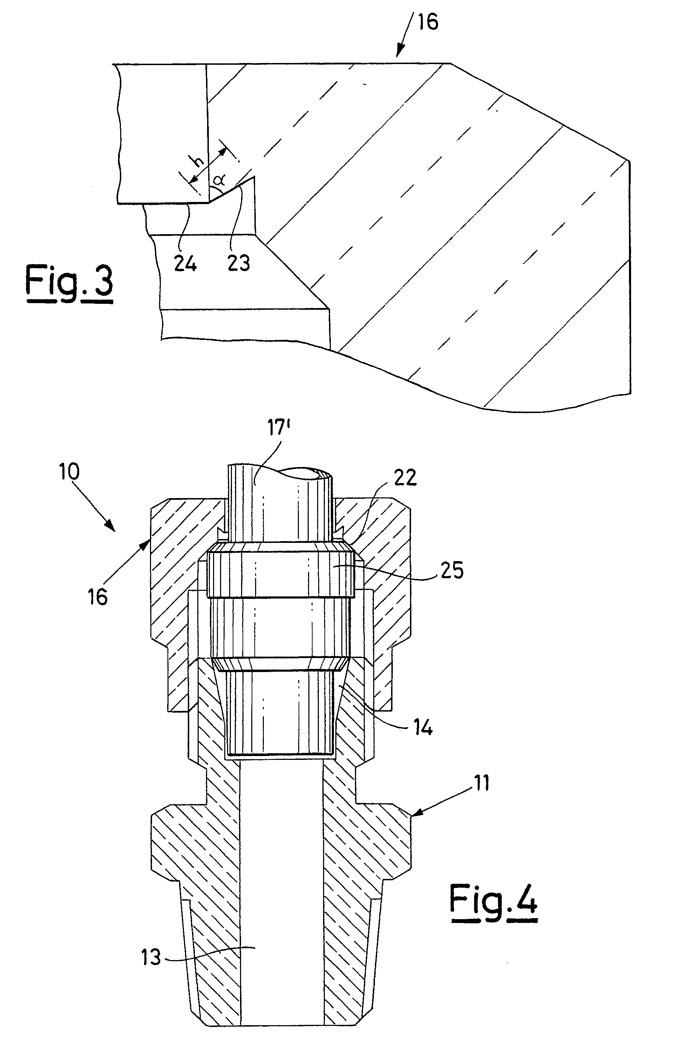

As shown more clearly in figure 3, the collar comprises an annular cross-section portion which surrounds the hole through which the pipe 17 passes towards the main body, which is made with a substantially conical surface 23, so as to define a sharp edge 24 which holds the pipe 17, as is explained further on. The edge 24 has an angle '$\alpha$' ranging from 80° to 60° and a height 'h' advantageously ranging from 3/10ths to 5/10ths of a millimetre.The pipe fitting described above operates in the following way.

The pipe 17, made of pliable material, is passed through the collar 16 and then fitted onto the shank 20, so that its end is radially expanded by the enlargement at the base of the shank. This fitting operation can be carried out quite comfortably since it can also be performed at a distance from the main body, which is already secured in place to the part of the system to which the pipe is to be connected and which is generally in a position that is difficult to reach.

Once the pipe has been fitted, the parts are brought together as shown in figure 1 and the collar is screwed onto the main body. This operation is made easier by the centering function provided by the insert.

As the collar is gradually screwed on, the sharp edge reaches and grips the portion of the pipe radially deformed by the shank, stretching the end of the pipe and simultaneously compressing its terminal portion inside the fitting, thereby ensuring that it is firmly gripped.

When the collar is screwed on completely, as shown in figure 2, the end of the pipe is deformed and compressed, so as to substantially occupy all the space in the fitting, above the flange 21. The flange comes into contact with the surface 22 of the collar so as to press the insert 18 with the part 19 firmly against the conical surface 14., thus ensuring that the pipe fitting is absolutely watertight.

It should be pointed out that the edge 24 advantageously ensures that the pipe cannot be pulled out of the pipe fitting even if the collar is partially unscrewed since it is firmly fastened onto the outer surface of the pipe. This is a very important feature in the case of systems under pressure where the accidental loosening of the fitting, resulting in the end of the pipe being violently ejected, must be avoided.

A further advantage consists of the fact that, since the shank 20 is separate from the body 11, the duct 13 can be easily made with a diameter substantially larger than the diameter of the duct 26, the latter being established by the internal diameter of the pipe 17 and by the need to provide the shank with walls thick enough to ensure that it is sufficiently sturdy. In the known pipe fittings of the type mentioned previously, in which the flexible pipe is fitted onto a shank forming an integral part of the body of the pipe fitting, due to mechanical machining requirements the internal duct has a uniform and, as mentioned, necessarily limited diameter extending along the entire length of the pipe fitting.

From experimental tests carried out on pipe fittings according to the invention and corresponding pipe fittings of known technique for flexible pipes pof equal diameter and with ends for securing the fittings to the rest of the system having identical connections in both types, it has been found that the increase in flow in the pipe fittings according to the invention, due to the difference in diameter between the ducts in the shank and in the main body, is in the region of 38% for straight pipe fittings, and as much as 40% for pipe fittings with complicated shapes such as for example union elbows or tees.

A further advantageous feature of the pipe fitting, according to the innovatory principles of the invention, consists of the fact that it can be made (as is also shown in the accompanying drawings) with the main body and collar having a shape suitable for gripping and compressing, according to the known technige, between the conical surface 22 and the conical surface 14, as shown in figure 4, a choke ring 25 fitted onto a rigid pipe 17', in place of the insert 18, in order to obtain the previously mentioned connection for rigid pipes.

It is clear, therefore, that with a pipe fitting according to the invention, it is possible to carry out a connection both with rigid pipes and a connection with pipes with a relatively high flexibility, simply by using, respectively, either the insert 18 or a choke ring 25.

The foregoing description of an embodiment applying the innovatory principles of this invention is obviously given purely by way of example in order to illustrate such innovatory principles and should not therefore be understood as a limitation to the spheres of the invention claimed herein. For example, the end of the pipe fitting opposite the pipe is described as threaded to enable it to be screwed into a hole, however, said opposite end can obviously be shaped differently, and can for example also comprise a pipe coupling, according to the invention or of known technique, or form part of a union tee or the like.

## Claims

1. A pipe fitting of the type suitable for receiving the end of a pipe and of tightly connecting it to a duct inside it, comprising a main body ending in an axially hollow shank onto which the pipe is fitted and a collar which is screwed onto the main body coaxial to the shank so as to be penetrated by the pipe in correspondence with a through hole in the latter and compress it radially onto the shank, characterized by the fact that the shank has a widened base portion and protrudes from one end of an insert which is coupled, at the opposite end, to the main body by resting on the internal wall of a truncated cone-shaped housing aligned with the shank and extending into the duct inside the pipe fitting, an internal surface of the collar resting on a flange on the insert to compress it into said housing, the annular cross-section portion surrounding the hole in the collar through which the pipe passes which faces towards the main body is substantially conical so as to define an edge with an acute angled section for gripping and holding the portion of the pipe which is radially expanded by said widened base portion of the shank when the collar is screwed onto the main body.

2. Pipe fitting as claimed in Claim 1, characterized by the fact that the sharp edge has a height ranging from 3/10ths to 5/10ths of a millimetre.

3. Pipe fitting as claimed in Claim 1, characterized by the fact that the sharp edge has an angle ranging from 80° to 60°.

Fig. 2

Fig. 1

EP 0 425 022 A1

16

h

α

24    23

<u>Fig.3</u>

17'

10

16

22

25

14

11

13

<u>Fig.4</u>

6

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | NL-A-7 103 423 (FESTO-MASCHINENFABRIK GOTTLIEB STOLL) <br> * Figure 2 * | 1 | F 16 <br> L 33/22 |
| | – – – | | |
| Y | FR-A-2 336 623 (SOCIETE DES FLEXIBLES ANOFLEX) <br> * Claim 1; figures 1,2 * | 1 | |
| | – – – | | |
| Y | GB-A-1 188 512 (BTR INDUSTRIES LTD) <br> * Figure 2 * | 1 | |
| | – – – | | |
| Y | US-A-3 408 099 (APPLETON) <br> * Figure 6 * | 1 | |
| | – – – – – | | |

TECHNICAL FIELDS
SEARCHED (Int. Cl.5)

F 16 L

The present search report has been drawn up for all claims

| Place of search | Date of completion of search | Examiner |
|---|---|---|
| The Hague | 22 January 91 | BUDTZ-OLSEN A. |